# FASCICULE DE BREVET EUROPEEN

(11) **EP 3 874 619 B1**
(45) Date de publication et mention de la délivrance du brevet: **26.10.2022**
(21) Numéro de dépôt: 19816832.0
(22) Date de dépôt: 29.10.2019
(51) Int. Cl.: H04B 7/185

(54) **PROCÉDÉ DE TRANSMISSION DE DONNÉES ISSUES D'UN OBJET EMBARQUÉ DANS UN AÉRONEF À UN RÉSEAU D'OBJETS CONNECTÉS**
VERFAHREN ZUR ÜBERTRAGUNG VON DATEN VON EINEM OBJEKT AN BORD EINES FLUGZEUGS ZU EINEM NETZWERK AN VERBUNDENEN OBJEKTEN
METHOD FOR TRANSMITTING DATA FROM AN OBJECT ON BOARD AN AIRCRAFT TO A NETWORK OF CONNECTED OBJECTS

(30) Priorité: 29.10.2018 FR 1871330
(43) Date de publication de la demande: 08.09.2021
(73) Titulaire: SAFRAN ELECTRONICS & DEFENSE, 92100 Boulogne Billancourt (FR)
(72) Inventeur: FANTON, Nicolas, 77550 Moissy-Cramayel (FR); TINE, Pierre-Jean, 77550 Moissy-Cramayel (FR); COUTURIER, Emmanuel, 77550 Moissy-Cramayel (FR)
(74) Mandataire: Regimbeau
(86) Numéro de dépôt international: PCT/FR2019/052574
(87) Numéro de publication internationale: WO 2020/089562

(56) Documents cités:
- EP-A1- 2 023 685
- EP-A1- 2 154 865
- WO-A1-2013/184894
- US-A1- 2010 142 482

## Description

### DOMAINE DE L'INVENTION

La présente invention se rapporte au domaine des objets connectés.

L'invention concerne plus particulièrement un procédé de transmission de données issues d'un objet embarqué dans un aéronef à un réseau d'objets connectés, et un système pour mettre en œuvre un tel procédé.

### ETAT DE LA TECHNIQUE

L'usage d'objets connectés à bord d'un aéronef s'est démocratisé.

De tels objets connectés ont généralement pour fonction d'acquérir des données renseignant sur l'état d'une partie d'un aéronef. Ces données ont vocation à être transmises à un réseau d'objets connectés.

Un objet connecté communique généralement ses données à un réseau d'objets connectés en émettant des signaux radios dans un format compatible avec le réseau concerné, c'est-à-dire qu'un serveur appartenant au réseau peut acquérir ces signaux et en extraire les données.

Une telle transmission à un réseau connecté ne pose généralement pas de problèmes lorsque l'aéronef comprenant un tel objet connecté est au sol.

Toutefois, lorsqu'un tel aéronef est en vol, cette transmission peut se dégrader voire même être rendue impossible dans le cas où l'objet est hors de portée du réseau d'objets connectés.

Or, il est très important que certaines données, par exemple indicatives d'un état critique ou non de l'aéronef, puissent être transmises en continu au réseau d'objets connectés, et notamment lorsque l'aéronef est en vol.

Les documents US2010/142482, EP2023685, WO2013/184894 et EP2154865 font partie de l'art antérieur.

### EXPOSE DE L'INVENTION

L'objet de l'invention est tel que défini dans les revendications indépendantes 1 et 9. D'autres aspects additionnels sont divulgués dans les revendications dépendantes 2-8.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 illustre de façon schématique un aéronef qui comprend un système de transmission selon un mode de réalisation de l'invention, ainsi qu'une station au sol et un réseau d'objets connectés ;
- La figure 2 est un organigramme d'étapes d'un procédé de transmission de données selon un mode de réalisation de l'invention.

Sur l'ensemble des figures, les éléments similaires portent des références identiques.

### DESCRIPTION DETAILLEE DE L'INVENTION

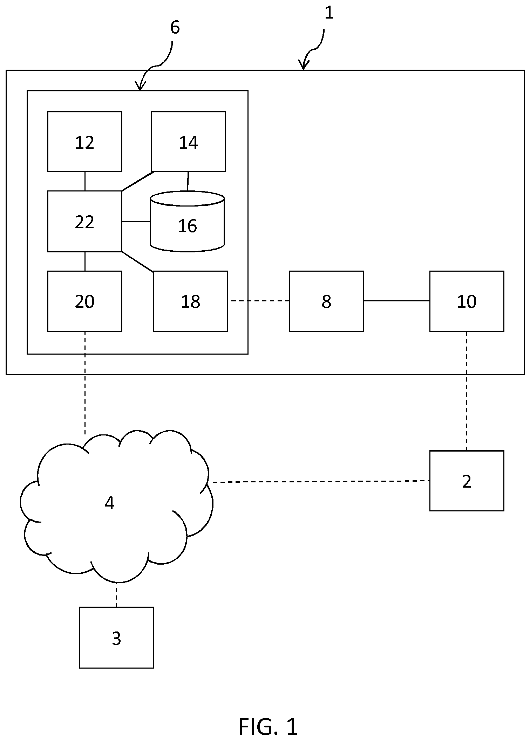

On a illustré schématiquement en **figure 1** un aéronef 1, une station au sol 2, un serveur 3 et un réseau d'objets connectés 4.

L'aéronef 1 est par exemple un avion ou un hélicoptère.

Le serveur 3 est accessible via le réseau d'objets connectés 4. Il est apte à recevoir des données de différents objets connectés.

La station au sol 2 est apte à transmettre des données au serveur 3, par exemple via le réseau 4 ou via une liaison indépendante du réseau 4 (par exemple via Internet).

Le réseau d'objets connectés 4 est de type LPWAN, tel que LoRaWAN ou Sigfox. Les réseaux de type LPWAN sont particulièrement avantageux car permettent d'émettre et recevoir des messages de très petites tailles, sur de très longues portées (par exemple jusqu'à 40km) de manière très peu énergivore pour l'objet émetteur.

L'aéronef 1 comprend un système de transmission de données au réseau d'objets connectés 4.

Le système de transmission de données comprend un objet 6, un récepteur radio 8 et un dispositif de radiocommunication aéronautique 10.

Le récepteur radio 8 est agencé dans l'aéronef 1 pour recevoir certains signaux radio émis par l'objet 6. Ces signaux qui seront discutés ci-après.

Le dispositif de radiocommunication aéronautique 10 est configuré pour communiquer avec une station au sol 2 lorsque l'aéronef 1 est en vol. Il est connu en lui-même.

Le dispositif de radiocommunication aéronautique 10 est par exemple configuré pour communiquer avec une station au sol 2 par l'intermédiaire de satellites (par exemple Satcom, Gatelink).

Le dispositif de radiocommunication aéronautique 10 est par exemple configuré pour émettre des signaux radio dans la bande de fréquence Ku (bande de fréquences micro-ondes allant de 12 GHz à 18 GHz).

Le récepteur radio 8 est relié au dispositif de radiocommunication aéronautique 10 via un réseau local de l'aéronef 1, par exemple un réseau local filaire, typiquement de type ARINC.

L'objet 6 comprend au moins un capteur de mouvement 12 adapté pour acquérir des mesures de mouvement par rapport au sol, par exemple un accéléromètre et/ou un gyromètre et/ou un capteur de vitesse linéaire.

L'objet 6 comprend par ailleurs au moins un deuxième capteur 14 adapté pour acquérir des données destinées à être transmises au réseau d'objets connecté. Les capteurs suivants peuvent être utilisés en tant que deuxième capteur 14 :
- un capteur de température ou de pression atmosphérique fournissant des données de température ou de pression dans une partie de l'aéronef 1, par exemple dans un pneu d'un train d'atterrissage, dans une soute ou même dans un container stocké dans la soute ;
- un capteur agencé pour fournir une donnée indiquant si un équipement de l'aéronef 1 est ouvert ou fermé, l'équipement étant par exemple un capot donnant accès à un moteur de l'aéronef 1 ;
- un récepteur GPS/GNSS fournissant des données de positionnement de l'objet 6 à partie de signaux de navigation émis par des satellites, et donc a fortiori des données de positionnement de l'aéronef 1 si l'on suppose que l'objet 6 est fixé à l'aéronef 1 ou que son mouvement par rapport à l'aéronef 1 est négligeable.
- Un capteur d'une mesure physique permettant de surveiller l'usage, le statut ou l'état d'usure d'un équipement : pression hydraulique, voltage, ampérage, position d'un élément d'un équipement, orientation d'un élément d'un équipement, la déflexion d'un élément métallique.

L'objet 6 comprend par ailleurs un enregistreur 16 configuré pour mémoriser des données fournies par le ou chaque deuxième capteur 14.

L'objet 6 comprend par ailleurs une première interface de communication 18 pour communiquer avec le récepteur radio 8 également embarqué dans l'aéronef 1. La première interface de communication 18 comprend par exemple une étiquette RFID passive. L'étiquette RFID permet par exemple le paramétrage de l'objet 6.

La première interface de communication 18 est configurée pour émettre des signaux radio ayant une première fréquence F1.

La première fréquence est de préférence une fréquence internationale. Elle est par exemple de 2,4 GHz ou comprise dans la bande allant de 4,2 à 4,4 GHz.

L'objet 6 comprend par ailleurs une deuxième interface de communication 20 pour communiquer par radio avec le réseau 4, à supposer que celui-ci soit à portée. La deuxième interface de communication 20 comprend une antenne radio et un filtre fréquentiel en amont de l'antenne pour ajuster la fréquence d'un signal à émettre via l'antenne à une deuxième fréquence F2.

La deuxième fréquence F2 est différente de la première fréquence F1.

La deuxième fréquence F2 est typiquement comprise dans une bande ISM. La deuxième fréquence F2 est par exemple comprise dans la bande allant de 863 MHz à 928 MHz ; elle est par exemple égale à 868 MHz.

La deuxième interface de communication 20 est configurée pour émettre des signaux radio conformes à la spécification EUROCAE ED-14E/RTCA DO-160E (dans l'une quelconque de ses révisions), Section 21, Catégorie H.

L'objet 6 comprend par ailleurs une unité de traitement 22. L'unité de traitement 22 comprend par exemple au moins un processeur.

Une fonction de l'unité de traitement 22 est de commander les interfaces de communication 18 et 20 sur la base d'une logique qui sera décrite ci-après.

L'objet 6 comprend par ailleurs une batterie (non illustrée) pour alimenter en énergie les composants qui précèdent de l'objet 6. De préférence, la batterie est une batterie non-rechargeable au lithium, conformément à la spécification ETSO C142a (« European Technical Standard Order », Non-rechargeable lithium cells and batteries).

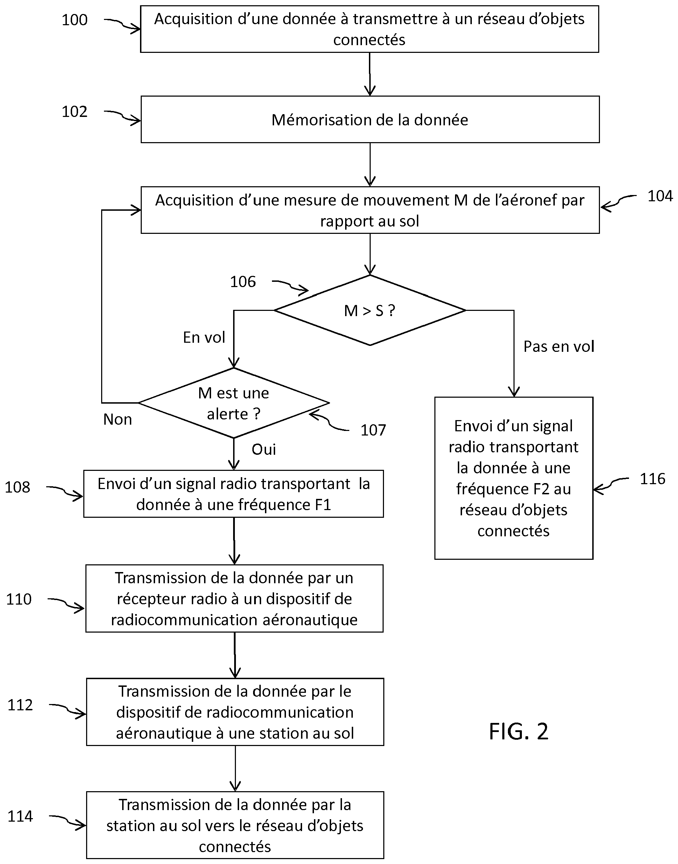

En référence à la **figure 2****,** un procédé comprend les étapes suivantes.

Un deuxième capteur 14 de l'objet 6 acquiert une donnée (de température, pression, etc.), cette donnée ayant vocation à être transmise à un réseau du réseau d'objets connectés 4 (étape 100).

La donnée acquise est mémorisée dans l'enregistreur 16 (étape 102).

L'unité de traitement 22 met en œuvre un test visant à déterminer si l'aéronef 1 dans lequel le système de transmission est embarqué est en vol ou non.

Pour la mise en œuvre de ce test, le capteur de mouvement 12 acquiert une donnée de mouvement M par rapport au sol (étape 104).

L'unité de traitement 22 compare la donnée de mouvement M à un seuil prédéterminé S, par exemple mémorisé par l'enregistreur 16 (étape 106).

Lorsque la donnée de mouvement M est supérieure au seuil prédéterminé S, l'unité de traitement 22 considère que l'aéronef 1 est en vol.

Lorsque la donnée de mouvement M n'est pas supérieure au seuil prédéterminé S, l'unité de traitement 22 considère que l'aéronef 1 n'est pas en vol.

Le seuil S associé à un deuxième capteur 14 est choisi supérieur au bruit de mesure de ce capteur 14.

Lorsque le seuil S est une accélération, sa valeur est supérieure au bruit de mesure du capteur en g.

Lorsque le seuil S est une vitesse angulaire, sa valeur est supérieure au bruit de mesure du capteur en radian / seconde.

Par ailleurs, de préférence, le seuil S a une valeur adaptée pour être franchi au cours d'une phase de roulage de l'aéronef 1. Par exemple, on pourra choisir pour le seuil S une valeur de vitesse comprise entre 10 km/h et 50 km/h, ou une valeur d'accélération comprise entre 0,4 G et 0,7 G.

Le test mis en œuvre peut utiliser plusieurs seuils respectivement associés à différents deuxièmes capteurs 14, auquel cas l'étape de comparaison est mise en œuvre pour chaque deuxième capteur 14 impliqué, la décision quant au caractère en vol ou non de l'aéronef étant prise en fonction des résultats respectifs des comparaisons effectuées. Utiliser plusieurs capteurs permet au test de fonctionner même lorsqu'un des capteurs 14 subit une défaillance.

Il est par exemple avantageux d'utiliser un gyromètre et un accéléromètre en guise de capteurs 14, de comparer la vitesse acquise par le gyromètre à un seuil de vitesse, de comparer l'accélération acquise par l'accéléromètre à un seuil d'accélération, et de prendre une décision quant au caractère en vol ou non de l'aéronef en fonction de ces deux comparaisons.

Si l'avion est en palier, un accéléromètre seul peut ne pas voir de mouvement. Il est donc préférable de vérifier l'absence de mouvement aussi en roulis pour éviter un passage intempestif du capteur en mode SOL en plein vol.

Dans le cas où l'aéronef 1 est détecté comme étant en vol, les étapes suivantes sont mises en œuvre (en partie gauche de la figure 2).

L'unité de traitement 22 commande l'émission par l'objet 6, via la première interface de communication 18, d'un premier signal radio transportant la donnée mémorisée dans l'enregistreur 16, la fréquence du premier signal radio étant égale à une première fréquence F1 telle que définie précédemment (étape 108).

Le premier signal radio est acquis par le récepteur radio 8 embarqué dans l'aéronef 1. Le récepteur radio 8 transmet ensuite la donnée au dispositif de radiocommunication aéronautique 10, via le réseau local de l'aéronef 1 (étape 110).

Le dispositif de radiocommunication aéronautique 10 transmet ensuite la donnée à la station au sol 2, par exemple via le système Satcom, Gatelink ou autre (étape 112).

On constate ici que, lorsque l'aéronef est détecté comme étant en vol, la donnée transite par le réseau local de l'aéronef. Ceci présente l'avantage de permettre au personnel navigant, par exemple le pilote de l'aéronef 1, d'être averti immédiatement de la valeur de la donnée émise par l'objet 1. Si le personnel navigant s'aperçoit que la donnée a une valeur anormale, le personnel navigant peut ainsi tenter d'y remédier. Par exemple, si la donnée transmise par l'objet 1 est une température dans une soute de l'aéronef qui s'avère être trop élevée, le pilote peut sans délai commander un abaissement de la température de la soute en question.

Par ailleurs, lorsque l'aéronef 1 est détecté comme étant en vol, l'unité de traitement 22 commande une inhibition de la deuxième interface de communication 20, de sorte que celle-ci n'émette pas de signal radio à une fréquence F2.

Cette inhibition a pour avantage d'éviter de violer certaines réglementations relatives aux émissions de signaux depuis un aéronef. Par exemple, à partir du moment où l'aéronef est en vol, on ne connait plus sa position géographique celui-ci n'a plus le droit d'émettre à la fréquence 868 Mhz par exemple (fréquence ISM Europe), dont l'utilisation est interdite sur le territoire américain.

La station au sol 2 transmet ensuite la donnée contenue dans le signal que la station 2 a reçu au serveur 3. Pour cela, la station au sol 2 émet par exemple un signal radio LPWAN compatible avec le réseau d'objets connectés 4, par exemple un signal radio au format LoRaWAN ou Sigfox (étape 114), de sorte que ce signal parvienne au serveur 3 en passant par le réseau d'objets connectés 4. En variante, la station transmet cette donnée au serveur 3 via une autre liaison, par exemple Internet.

La fréquence de ce signal radio émis par la station au sol 2 est une deuxième fréquence F2 conforme à la description qui précède.

Lorsque le dispositif est en vol, l'objet 6 peut se trouver hors de portée du réseau d'objets connectés 4. C'est pourquoi le fait de faire en sorte que la donnée transite par le dispositif de radiocommunication aéronautique 10 de l'aéronef 1 lorsque celui-ci est en vol permet d'assurer une continuité dans la transmission des données au réseau d'objets connectés 4.

Dans le cas où l'aéronef 1 est détecté comme n'étant pas en vol, l'unité de traitement 22 commande l'émission, via la deuxième interface de communication 20, d'un deuxième signal radio transportant la donnée mémorisée dans l'enregistreur 16, la fréquence du deuxième signal radio étant égale à une deuxième fréquence F2 telle que définie précédemment (étape 116).

Le deuxième signal radio est compatible avec le réseau d'objets connectés 4, de manière à pouvoir être capté par un élément de ce réseau sans que la donnée ne transite par le dispositif de radiocommunication de l'aéronef 1, et de sorte que son contenu soit transmis au serveur 3.

Les étapes qui précèdent sont répétées pour plusieurs données à transmettre au réseau d'objets connectés 4. De préférence, les interfaces de communications 18 ou 20 émettent en continu des signaux radio transportant des données acquises par l'objet 6 continument au cours de cycles dont la durée n'excède pas 3 secondes.

Il est à noter que la mise en œuvre des étapes 108 à 114 peuvent être conditionnée à la valeur de la donnée à transmettre.

L'unité de traitement 22 peut ainsi procéder à une analyse de la donnée (étape 107), et déclencher l'étape d'envoi 108 de la donnée dans le signal radio à la première fréquence F1 à condition que la donnée a une valeur ayant franchi un seuil prédéterminé.

Cette condition d'envoi de la donnée permet d'alerter le serveur 3 sur des phénomènes anormaux survenant à l'intérieur de l'aéronef sans pour autant consommer beaucoup de bande passante au niveau de la liaison entre le dispositif de radiocommunication aéronautique 10 et la station au sol 2.

Le seuil conditionnant l'envoi de la donnée est typiquement une borne d'un intervalle de valeurs acceptables pour la donnée acquise.

Par exemple, la gamme allant de 5 à 20°C est une gamme de températures acceptables dans certaines parties d'un l'aéronef.

Si la donnée a une valeur comprise dans un intervalle de valeurs acceptables (autrement dit, n'a pas encore franchi de seuil formé par l'une des bornes de cet intervalle), cette donnée est conservée dans l'enregistreur 16, et sa transmission n'est effectuée qu'une fois qu'il est détecté que l'aéronef n'est pas en vol. Ainsi, c'est via l'étape 116 que cette donnée est transmise, et ce même si cette donnée a été acquise par l'objet 6 pendant le vol de l'aéronef. L'envoi des données à la station au sol 2 consomme de la bande passante au niveau du dispositif de radiocommunication aéronautique, lequel est bien évidemment utilisé pour transporter d'autres données que celles issues de l'objet 6. Ainsi, un avantage de la mise en place de cette condition pour déclencher l'étape 108 est d'obtenir un bon compromis entre consommation de bande passante au niveau du dispositif de radiocommunication aéronautique et sécurité.

Le fait que le seuil S utilisé au cours du procédé qui précède a une valeur adaptée pour être franchie au cours d'une phase de roulage de l'aéronef présente plusieurs avantages. Premièrement, cela permet au procédé de respecter la réglementation FAA AC 91.21-1C §8 dite CDT (« Cargo Tracking Device »).

L'invention ne se résume pas aux modes de réalisation illustrés sur les figures et décrits précédemment. L'invention peut en effet faire l'objet d'autres modes de réalisation.

Dans le mode de réalisation représenté en figure 1, deux interfaces de communication distinctes sont utilisées pour émettre respectivement des signaux radio à la première fréquence (la première interface de communication 18) et à la deuxième fréquence (la deuxième interface de communication 20). En variante, l'objet 6 peut ne comprendre qu'une interface de communication pour émettre ces deux types de signaux. Une telle interface de communication commune peut comprendre une antenne couplée à un modulateur de fréquence configuré pour ajuster la fréquence d'un signal radio émis par l'antenne à la première fréquence ou à la deuxième fréquence. Le modèle SX1280 commercialisé par STM est par exemple utilisable en guise de modulateur de fréquence.

Par ailleurs, le récepteur radio 8 est facultatif. L'objet 6 peut être connecté au dispositif de radiocommunication via le réseau local filaire de l'aéronef 1, autrement dit faire partie du réseau local filaire de l'aéronef 1. Toutefois, ceci impliquerait des contraintes de fabrication forte sur l'objet 6, puisque les réseaux locaux d'aéronef 1s sont fortement réglementés. C'est pourquoi utiliser le récepteur radio 8 comme passerelle entre l'objet 6 et le dispositif de radiocommunication aéronautique 10 a pour avantage d'éviter que de telles contraintes ne pèsent sur l'objet 6 lui-même.

Il n'est pas obligatoire que la détection du caractère en vol ou non de l'aéronef 1 soit mise en œuvre à l'aide d'un capteur de mouvement inclus dans l'objet.

Il pourrait être envisagé que le capteur de mouvement soit à l'extérieur de l'objet, mais cela complexifierait l'architecture du système de transmission.

Par ailleurs, la détection du caractère en vol ou non de l'aéronef pourrait être mise en œuvre à l'aide d'autres moyens qu'un capteur de mouvement, par exemple un altimètre. Toutefois, l'avantage d'un capteur de mouvement est qu'il peut fonctionner dans un environnement pressurisé (par exemple une soute de l'aéronef 1), ce qui n'est pas le cas d'un altimètre.

## Revendications

1. Procédé de transmission d'une donnée issue d'un objet (6) embarqué dans un aéronef (1) à un serveur (3) d'un réseau d'objets connectés (4), le procédé comprenant des étapes de :
- acquisition (104), par un capteur de mouvement (12) compris dans l'objet (6), d'une mesure de mouvement (M) de l'aéronef (1) par rapport au sol, l'aéronef (1) étant détecté comme étant en vol lorsque la mesure de mouvement (M) franchit un seuil prédéterminé (S),
- lorsque l'aéronef (1) est détecté comme étant en vol, envoi (108) par l'objet (6) de la donnée à un dispositif de radiocommunication aéronautique (10) de l'aéronef (1) avec le sol, et transmission de la donnée par le système de communication aéronautique (10) à une station au sol (2), en vue d'une retransmission ultérieure de la donnée par la station au sol (2) vers le serveur (3),
- lorsque l'aéronef (1) est détecté comme n'étant pas en vol, envoi (116) par l'objet (6) de la donnée au serveur (3) sans passer par le système de radiocommunication aéronautique (10) de l'aéronef (1).

2. Procédé selon la revendication précédente, dans lequel le seuil S a une valeur adaptée pour être franchie au cours d'une phase de roulage de l'aéronef (1).

3. Procédé selon l'une des revendications précédentes, dans lequel le capteur de mouvement (12) comprend un accéléromètre et/ou un gyromètre et/ou un capteur de vitesse linéaire.

4. Procédé selon l'une des revendications précédentes, dans lequel l'objet (6) envoie la donnée dans un premier signal radio à un récepteur (8) embarqué dans l'aéronef (1) lorsque l'aéronef (1) est détecté comme étant en vol, et le récepteur (8) transmet (110) la donnée au dispositif de radiocommunication aéronautique (10) via un réseau local de l'aéronef (1), par exemple filaire.

5. Procédé selon l'une des revendications précédentes, dans lequel la donnée est envoyée (108, 116) dans un premier signal radio ayant une première fréquence (F1) lorsque l'aéronef (1) est détecté comme étant en vol, ou dans un deuxième signal radio ayant une deuxième fréquence (F2) différente de la première fréquence lorsque l'aéronef (1) est détecté comme n'étant pas en vol.

6. Procédé selon l'une des revendications précédentes, dans lequel, lorsque l'avion est détecté comme étant en vol :
- si la donnée a une valeur ayant franchi un seuil prédéterminé, la donnée est envoyée au dispositif de radiocommunication aéronautique (10),
- sinon, la donnée est mémorisée par l'objet (6) puis est envoyée (116) au serveur (3) du réseau d'objets connectés (4) sans passer par le système de radiocommunication aéronautique (10) de l'aéronef (1) une fois qu'il est détecté que l'aéronef n'est plus en vol.

7. Procédé selon l'une des revendications précédentes, dans lequel la donnée est acquise par un capteur de l'objet (6) embarqué, et est :
- une température ou une pression dans une partie de l'aéronef (1), la partie étant par exemple un pneu d'un train d'atterrissage, une soute ou une nacelle, ou
- une information indiquant si un équipement de l'aéronef (1) est ouvert ou fermé, l'équipement étant exemple un capot donnant accès à un moteur de l'aéronef (1), ou
- une mesure physique permettant de surveiller l'usage, le statut ou l'état d'usure d'un équipement, telle que : pression hydraulique, voltage, ampérage, position d'un élément d'un équipement de l'aéronef (1), orientation d'un élément d'un équipement de l'aéronef (1), déflexion d'un élément métallique de l'aéronef (1).

8. Procédé selon l'une des revendications précédentes, dans lequel le réseau d'objets connectés (4) est de type LPWAN, par exemple LoRaWAN ou Sigfox.

9. Système de transmission d'une donnée à un serveur (3) d'un réseau d'objets connectés (4), le système étant destiné à être embarqué dans un aéronef (1), le système comprenant un objet (6) et un dispositif de radiocommunication aéronautique (10), dans lequel
- l'objet (6) comprend un capteur de mouvement (12) configuré pour acquérir une mesure de mouvement (M) de l'aéronef (1) par rapport au sol, l'aéronef (1) étant détecté comme étant en vol lorsque la mesure de mouvement (M) franchit un seuil prédéterminé (S),
- l'objet (6) est configuré pour envoyer une donnée au dispositif de radiocommunication aéronautique (10) lorsque l'aéronef (1) est détecté comme étant en vol,
- le dispositif de radiocommunication aéronautique (10) est configuré pour transmettre la donnée envoyée par l'objet (6) à une station au sol (2), en vue d'une retransmission ultérieure de la donnée par la station au sol (2) vers le serveur (3),
- l'objet (6) est par ailleurs configuré pour envoyer la donnée au serveur (3) sans passer par le système de communication de l'aéronef (1), lorsque l'aéronef (1) est détecté comme n'étant pas en vol.

## Patentansprüche

1. Verfahren zur Übertragung eines Datenelements, das von einem Objekt (6) an Bord eines Luftfahrzeugs (1) stammt, an einen Server (3) eines Netzes von verbundenen Objekten (4), wobei das Verfahren die folgenden Schritte umfasst:
- Erfassen (104), durch einen Bewegungssensor (12), der in dem Objekt (6) enthalten ist, einer Messung (M) der Bewegung des Luftfahrzeugs (1) in Bezug auf den Boden, wobei das Luftfahrzeug (1) als fliegend erkannt wird, wenn die Bewegungsmessung (M) einen vorbestimmten Schwellenwert (S) überschreitet,
- wenn das Luftfahrzeug (1) als fliegend erkannt wird, Senden (108), durch das Objekt (6), des Datenelements an eine Vorrichtung (10) zur Luftfahrt-Funkkommunikation des Luftfahrzeugs (1) mit dem Boden, und Übertragen des Datenelements durch das Luftfahrt-Kommunikationssystem (10) an eine Bodenstation (2) im Hinblick auf eine spätere Weiterübertragung des Datenelements durch die Bodenstation (2) an den Server (3),
- wenn das Luftfahrzeug (1) als nicht fliegend erkannt wird, Senden (116), durch das Objekt (6), des Datenelements an den Server (3) unter Umgehung des Luftfahrt-Funkkommunikationssystems (10) des Luftfahrzeugs (1).

2. Verfahren nach dem vorhergehenden Anspruch, wobei der Schwellenwert S einen Wert aufweist, der dazu angepasst ist, während einer Rollphase des Luftfahrzeugs (1) überschritten zu werden.

3. Verfahren nach einem der vorhergehenden Ansprüche, wobei der Bewegungssensor (12) einen Beschleunigungsmesser und/oder ein Gyrometer und/oder einen Lineargeschwindigkeitssensor umfasst.

4. Verfahren nach einem der vorhergehenden Ansprüche, wobei das Objekt (6) das Datenelement in einem ersten Funksignal an einen Empfänger (8) an Bord des Luftfahrzeugs (1) sendet, wenn das Luftfahrzeug (1) als fliegend erkannt wird, und der Empfänger (8) das Datenelement über ein lokales, zum Beispiel drahtgebundenes, Netzwerk des Luftfahrzeugs (1) an die Luftfahrt-Funkkommunikationsvorrichtung (10) überträgt (110) .

5. Verfahren nach einem der vorhergehenden Ansprüche, wobei das Datenelement in einem ersten Funksignal, das eine erste Frequenz (F1) aufweist, wenn das Luftfahrzeug (1) als fliegend erkannt wird, oder in einem zweiten Funksignal gesendet wird (108, 116), das eine zweite Frequenz (F2) aufweist, die sich von der ersten Frequenz unterscheidet, wenn das Luftfahrzeug (1) als nicht fliegend erkannt wird.

6. Verfahren nach einem der vorhergehenden Ansprüche, wobei, wenn das Luftfahrzeug als fliegend erkannt wird:
- wenn das Datenelement einen Wert aufweist, der einen vorbestimmten Schwellenwert überschritten hat, das Datenelement an die Luftfahrt-Funkkommunikationsvorrichtung (10) gesendet wird,
- ansonsten das Datenelement durch das Objekt (6) gespeichert wird und dann an den Server (3) des Netzes von verbundenen Objekten (4) unter Umgehung des Luftfahrt-Funkkommunikationssystems (10) des Luftfahrzeugs (1) gesendet wird (116), nachdem festgestellt wurde, dass das Luftfahrzeug nicht mehr fliegt.

7. Verfahren nach einem der vorhergehenden Ansprüche, wobei das Datenelement durch einen Sensor des Objekts (6) an Bord erfasst wird und Folgendes ist:
- eine Temperatur oder ein Druck in einem Teil des Luftfahrzeugs (1), wobei der Teil zum Beispiel ein Reifen eines Fahrwerks, ein Frachtraum oder eine Gondel ist, oder
- eine Information, die angibt, ob eine Ausrüstung des Luftfahrzeugs (1) geöffnet oder geschlossen ist, wobei die Ausrüstung zum Beispiel eine Haube ist, die Zugang zu einem Motor des Luftfahrzeugs (1) ermöglicht, oder
- eine physikalische Messung, die das Überwachen der Nutzung, des Status oder des Abnutzungszustands einer Ausrüstung ermöglicht, wie beispielsweise: hydraulischer Druck, Spannung, Stromstärke, Position eines Elements einer Ausrüstung des Luftfahrzeugs (1), Ausrichtung eines Elements einer Ausrüstung des Luftfahrzeugs (1), Durchbiegung eines metallischen Elements des Luftfahrzeugs (1).

8. Verfahren nach einem der vorhergehenden Ansprüche, wobei das Netz von verbundenen Objekten (4) vom Typ LPWAN, zum Beispiel LoRaWAN oder Sigfox, ist.

9. System zur Übertragung eines Datenelements an einen Server (3) eines Netzes von verbundenen Objekten (4), wobei das System dazu bestimmt ist, sich an Bord eines Luftfahrzeugs (1) zu befinden, wobei das System ein Objekt (6) und eine Luftfahrt-Funkkommunikationsvorrichtung (10) umfasst, wobei:
- das Objekt (6) einen Bewegungssensor (12) umfasst, der dazu ausgestaltet ist, eine Messung (M) der Bewegung des Luftfahrzeugs (1) in Bezug auf den Boden zu erfassen, wobei das Luftfahrzeug (1) als fliegend erkannt wird, wenn die Bewegungsmessung (M) einen vorbestimmten Schwellenwert (S) überschreitet,
- das Objekt (6) dazu ausgestaltet ist, ein Datenelement an die Luftfahrzeug-Funkkommunikationsvorrichtung (10) zu senden, wenn das Luftfahrzeug (1) als fliegend erkannt wird,
- die Luftfahrt-Funkkommunikationsvorrichtung (10) dazu ausgestaltet ist, das von dem Objekt (6) gesendete Datenelement an eine Bodenstation (2) im Hinblick auf eine spätere Weiterübertragung des Datenelements durch die Bodenstation (2) an den Server (3) zu übertragen,
- das Objekt (6) ferner dazu ausgestaltet ist, das Datenelement an den Server (3) unter Umgehung des Kommunikationssystems des Luftfahrzeugs (1) zu senden, wenn das Luftfahrzeug (1) als nicht fliegend erkannt wird.

## Claims

1. Method for transmitting a data element originating from an object (6) on board an aircraft (1) to a server (3) of a network of connected objects (4), the method comprising the following steps:
- detecting (104), by a motion sensor (12) included in the object (6), a measurement (M) of the motion of the aircraft (1) with respect to the ground, the aircraft (1) being detected as flying when the motion measurement (M) exceeds a predetermined threshold (S),
- when the aircraft (1) is detected as flying, sending (108), by the object (6), the data element to a device (10) for aeronautical radio communication of the aircraft (1) with the ground, and transmitting the data element by the aeronautical communication system (10) to a ground station (2) with a view to subsequent retransmission of the data element by the ground station (2) to the server (3),
- when the aircraft (1) is detected as not flying, transmitting (116), by the object (6), the data item to the server (3) bypassing the aeronautical radio communication system (10) of the aircraft (1) .

2. A method according to the preceding claim, wherein the threshold S has a value adapted to be exceeded during a taxiing phase of the aircraft (1) .

3. method according to any one of the preceding claims, wherein the motion sensor (12) comprises an accelerometer and/or a gyrometer and/or a linear velocity sensor.

4. method according to any one of the preceding claims, wherein the object (6) transmits the data item in a first radio signal to a receiver (8) on board the aircraft (1) when the aircraft (1) is detected as flying, and the receiver (8) transmits (110) the data item to the aeronautical radio communication device (10) via a local, for example wired, network of the aircraft (1).

5. a method according to any one of the preceding claims, wherein the data element is transmitted (108, 116) in a first radio signal having a first frequency (F1) when the aircraft (1) is detected as flying or in a second radio signal having a second frequency (F2) different from the first frequency when the aircraft (1) is detected as not flying.

6. a method according to any one of the preceding claims, wherein, when the aircraft is detected as flying:
- if the data item has a value exceeding a predetermined threshold, the data item is transmitted to the aeronautical radio communication device (10),
- otherwise, the data item is stored by the object (6) and then transmitted (116) to the server (3) of the network of connected objects (4) bypassing the aeronautical radio communication system (10) of the aircraft (1) after the aircraft is determined to be no longer flying.

7. method according to any one of the preceding claims, wherein the data item is detected by a sensor of the object (6) on board and is:
- a temperature or pressure in a part of the aircraft (1), the part being, for example, a tyre of a landing gear, a cargo compartment or a nacelle; or
- information indicating whether a piece of equipment of the aircraft (1) is open or closed, the piece of equipment being, for example, a canopy providing access to an engine of the aircraft (1), or
- a physical measurement enabling the monitoring of the use, status or state of wear of an item of equipment, such as: hydraulic pressure, voltage, current, position of an element of an item of equipment of the aircraft (1), orientation of an element of an item of equipment of the aircraft (1), deflection of a metallic element of the aircraft (1).

8. method according to any one of the preceding claims, wherein the network of connected objects (4) is of the LPWAN type, for example LoRaWAN or Sigfox.

9. system for transmitting a data element to a server (3) of a network of connected objects (4), said system being intended to be on board an aircraft (1), said system comprising an object (6) and an aeronautical radio communication device (10), wherein:
- the object (6) comprises a motion sensor (12) adapted to detect a measurement (M) of the motion of the aircraft (1) with respect to the ground, wherein the aircraft (1) is detected as flying when the motion measurement (M) exceeds a predetermined threshold (S),
- the object (6) is adapted to transmit a data element to the aircraft radio communication device (10) when the aircraft (1) is detected as flying,
- the aeronautical radio communication device (10) is adapted to transmit the data item transmitted by the object (6) to a ground station (2) with a view to subsequent retransmission of the data item by the ground station (2) to the server (3),
- the object (6) is further adapted to transmit the data item to the server (3) bypassing the communication system of the aircraft (1) when the aircraft (1) is detected as not flying.
